Europäisches Patentamt

European Patent Office

Office européen des brevets

(11) Publication number: 0 583 845 A1

# EUROPEAN PATENT APPLICATION

(21) Application number: 93202419.3

(22) Date of filing: 17.08.93

(51) Int. Cl.5: G11B 7/00, G11B 7/125

(30) Priority: 19.08.92 EP 92202541

(43) Date of publication of application:
23.02.94 Bulletin 94/08

(84) Designated Contracting States:
AT DE FR GB IT

(71) Applicant: PHILIPS ELECTRONICS N.V.
Groenewoudseweg 1
NL-5621 BA Eindhoven(NL)

(72) Inventor: Holtslag, Antonius Hendricus Maria
c/o Int. Octrooibureau B.V.,
Prof. Holstlaan 6
NL-5656 AA Eindhoven(NL)
Inventor: Coombs, James Howard
c/o Int. Octrooibureau B.V.,
Prof. Holstlaan 6
NL-5656 AA Eindhoven(NL)
Inventor: van Es-Spiekman, Wilma
c/o Int. Octrooibureau B.V.,
Prof. Holstlaan 6
NL-5656 AA Eindhoven(NL)

(74) Representative: Faessen, Louis Marie
Hubertus et al
INTERNATIONAAL OCTROOIBUREAU B.V.
Prof. Holstlaan 6
NL-5656 AA Eindhoven (NL)

(54) Information storage system.

(57) A device for optically scanning a record carrier
(1) with a recording layer of phase-change material
is described. The radiation beam supplied by a
radiation source (4) is focused on the recording layer
by an objective system (5). Crystalline information
areas may be written by means of the beam in the
initially amorphous recording layer. The information
areas are erased by means of pulses of the radiation
beam, while according to the invention the erasing
pulses have such a short duration that the areas of
the recording layer heated during erasing to a tem-
perature lower than the melting point of the record-
ing layer remain above the crystallization temperature of the recording layer for a period of time which
is shorter than the crystallization time.

FIG.1

The invention relates to an information storage system comprising a device and a record carrier, which device comprises a radiation source for generating a radiation beam for scanning the record carrier, and a pulse generator for generating write pulses and erasing pulses, the output of said generator being connected to an input of a modulator for modulating the intensity of the radiation beam, said record carrier having a recording layer in which information can be written by changing an area of the recording layer having an amorphous structure by means of write pulses of said radiation into an information area having a crystalline structure, and in which information can be erased by heating an information area above the melting point of the recording layer by means of erasing pulses of said radiation. The invention also relates to a device and a record carrier for use in such a system.

The modulator may be a separate optical element arranged in the radiation beam, or it may be integrated with the radiation source to a radiation source which can be modulated and directly supplies an intensity-modulated radiation beam.

A system of this type is known from the article "Optical memory" by P. Chaudhari and C.B. Zarowin in the IBM Technical Disclosure Bulletin, vol. 16, no. 2, July 1973, pp. 568 and 569. In this system a crystalline information area in an initially amorphous material is written by means of a pulsed and focused radiation beam. The information area is erased by rendering the material amorphous again by means of an erasing pulse at said area. The erasing pulse has a shorter pulse duration and a larger amplitude than the write pulse. However, it has been found that upon reading information which has been written after erasure a read signal is obtained which is not optimum and has a too low signal-to-noise ratio.

It is an object of the present invention to provide a system of the type described in the opening paragraph in which information written after erasure can also be read satisfactorily. To this end the system according to the invention is characterized in that the pulse duration of the erasing pulses and the cooling time of the recording layer are so short that the areas of the recording layer which are heated during erasing to a temperature which is higher than the crystallization temperature and lower than the melting point remain above the crystallization temperature of the recording layer only during a period of time which is shorter than the crystallization time.

The invention is based on the recognition that due to the erasure the recording layer does not entirely return to the amorphous state. It is found that small non-amorphous areas are left behind. After a subsequent write action these small areas between the information areas which have then been written impede reading of the record carrier. These small areas arise as follows. During erasure, the recording layer is heated by the pulsed radiation beam which is focused to a radiation spot, which spot locally heats the recording layer with a bell-shaped temperature profile. An area around the centre of the profile is heated above the melting point. This central area is generally as large as or slightly larger than the crystalline information area. After the beam has been switched off, the area cools down so rapidly that it solidifies in the amorphous structure. However, the radiation beam also heats an annular area, which is in the amorphous state, of the recording layer around the central area, namely up to a temperature which is lower than the melting point but higher than the crystallization temperature. The crystallization temperature is the temperature above which an area crystallizes within a period of time commonly used for writing in optical information storage systems, *i.e.* of the order of 1 μs. The initially amorphous annular area will entirely or partly crystallize due to this heating. Outside the annular area the temperature of the recording layer remains below the crystallization temperature, so that this layer will not change its structure at that area. These annular areas produce the above-mentioned read problems.

To crystallize an amorphous area, not only the temperature of the area should be raised above the crystallization temperature, but the area should also remain at this temperature for a sufficiently long time to enable the atoms in the recording layer to order themselves from the amorphous structure into the crystalline structure. The time minimally required for the recording layer to crystallize at a temperature just below the melting point will hereinafter be referred to as the crystallization time. The crystallization time is dependent, *inter alia* on the material of the recording layer. The time during which the annular area is above the crystallization temperature is mainly determined by the pulse duration of the erasing pulse and the cooling time, *i.e.* the time in which the area cools down from a temperature just below the melting point to the crystallization temperature. According to the invention, an erasing pulse having such a short pulse duration is used during erasing in combination with such a short cooling time that said annular area is heated above the crystallization temperature but only for a period of time which is shorter than the crystallization time so that there will be no crystallization. The area thus remains amorphous so that after erasing there are no completely or partly crystalline areas left which may impede reading of the newly written information at a later stage.

Different recording materials have such a crystallization temperature and melting point that the temperature of the recording layer halfway through the erasing pulse is approximately equal to the crystallization temperature when the recording layer at the end of the erasing pulse locally has a temperature which is just below the melting point. The time during which the recording layer is above the crystallization temperature is equal to half the pulse duration of the erasing pulse, supplemented with the cooling time. A particular embodiment of the system according to the invention is therefore characterized in that the erasing pulses have such a pulse duration that the cooling time plus half the pulse duration of the erasing pulses is shorter than the crystallization time of the recording layer.

A preferred embodiment of the system according to the invention is characterized in that during erasing the pulse generator generates a series of erasing pulses having such a duration between the erasing pulses that the areas in the recording layer successively heated by the radiation overlap each other. Due to the area overlap the radiation beam will render a path in the recording layer amorphous so that each area written in this path is erased.

A special embodiment of the device for use in the system according to the invention is characterized in that the device comprises a detection system for generating a read signal from the radiation originating from the record carrier, which read signal is applied to an input of the pulse generator, and in that the pulse generator is adapted to generate erasing pulses only at those periods of time when the read signal indicates the presence of an information area. By generating erasing pulses during an erasing cycle only at those locations where information areas are written, the load of the laser during erasing is lower than in the case of continuous pulsed erasing.

The device is preferably characterized in that the pulse generator is adapted to convert an information signal to be written, and applied to an input of the pulse generator, into a series of erasing pulses interrupted by one or more write pulses at those periods of time when in accordance with the information signal an information area is to be written. It is then possible to erase the previously written information in the recording layer and to write new information in one operation.

In spite of the short pulse duration of the erasing pulses, crystallization may still occur under certain circumstances after frequent erasing in the areas between the tracks in which the information areas are written. During erasing, areas of the recording layer will melt around the centreline so that possibly present crystalline areas are effectively erased. However, the areas midway between the tracks will at most be heated below the melting point and will consequently not be erased. Such a creeping crystallization can be inhibited by means of a device which comprises means for causing the centre of a scanning spot formed by the radiation beam to track a path on the recording layer substantially midway between neighbouring tracks for recording information areas. This provides the possibility of performing an extra erasing action after a given number of erasing actions on the tracks, with the scanning spot extending between the tracks so as to erase the crystalline areas formed in that area.

A record carrier in which the creeping crystallization is inhibited is characterized in that the recording layer has tracks in which the written areas are ordered and in that there are more crystallization nuclei proximate to the centreline of the tracks than right between the tracks. The low number of crystallization nuclei between the tracks considerably slows down the crystallization in that area. However, a sufficient number of crystallization nuclei should be present around the centreline of the tracks so that the crystallization of the information areas to be written can be effected sufficiently rapidly during writing.

A record carrier in which additional crystallization nuclei are provided in a simple manner is characterized in that there are grooves in the middle of the tracks in which sharp interfaces in the profile of the tracks constitute crystallization nuclei. The tracks can also be used for generating a tracking error signal with which the position of the radiation spot on the recording layer can be controlled.

A particular embodiment of the record carrier for use in the system according to the invention is characterized in that the reflection of the record carrier with the recording layer in the amorphous structure is larger than that with the recording layer in the crystalline structure. A higher power must be absorbed in the recording layer for erasing a crystalline information area than for writing such an area, because the recording layer must be heated above the melting point during erasing, whereas the recording layer is heated below the melting point during writing. By ensuring that the record carrier has a low reflection, hence a high absorption, when the largest quantity of radiation is to be absorbed, *viz.* during erasing, the power to be supplied by the radiation source may remain limited.

A special embodiment of the device is characterized in that the amplitudes of the write pulses and erasing pulses are substantially equal. Since a relatively high power must be absorbed by the recording layer during erasing, at which the record carrier has a relatively low reflection, and since a relatively low power must be absorbed by the recording layer during writing, at which the record carrier has a high reflection, it will become possible to render the power of the write pulses and erasing pulses approximately equal. This simplifies the construction of the pulse generator.

These and other aspects of the invention will be apparent from and elucidated with reference to the embodiments described hereinafter. In the drawings:

Fig. 1 shows diagrammatically an information storage system,

Fig. 2 is a cross-sectional view of a record carrier,

Fig. 3a shows an initially amorphous recording layer with written crystalline areas,

Fig. 3b is a graphic representation of temperature profiles in the recording layer as a function of the location during writing and erasing in an initially amorphous recording layer,

Fig. 3c shows a recording layer erased by means of the known method,

Fig. 3d graphically shows the temperature variation in the recording layer as a function of time during erasing and

Fig. 4 graphically shows a write pulse and erasing pulses for direct overwriting.

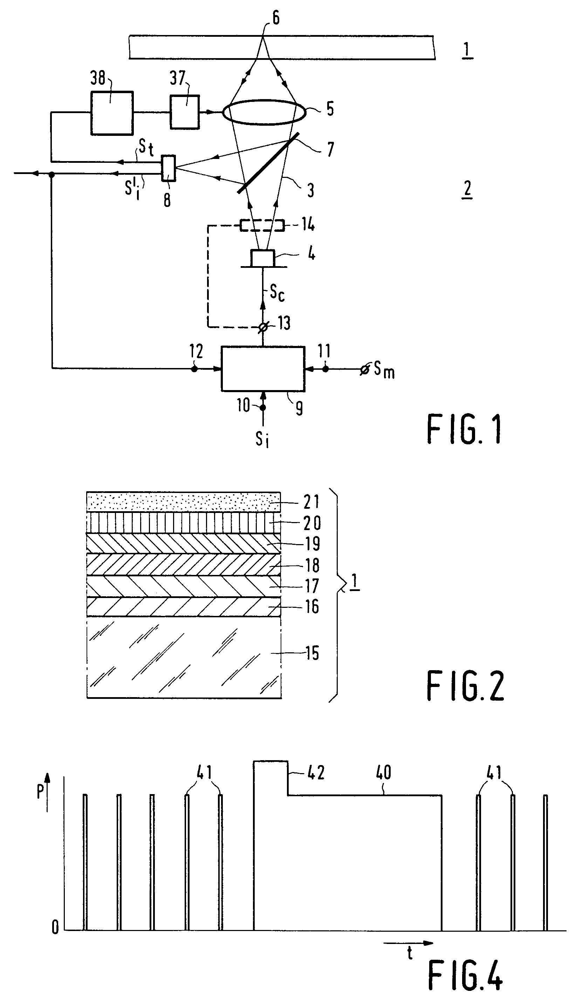

Fig. 1 shows an information storage system with a part of a record carrier 1 and a device 2 for writing information in the record carrier and for reading and erasing this information. In the device a radiation beam 3 is generated by a radiation source 4, preferably a diode laser. An objective system 5 focuses the radiation beam to a scanning spot 6 on a recording layer in the record carrier. At least a part of the radiation reflected by the record carrier is directed towards a detection system 8 by a beam splitter 7, for example a partially transparent mirror. The detection system generates a read signal $S_i'$ from the reflected radiation, which signal represents the information which is stored on the record carrier. The device also comprises a pulse generator 9 which generates pulses in dependence upon the signals at its inputs 10, 11 and 12. An information signal $S_i$ in which the information to be recorded is coded may be applied to input 10. A mode signal $S_m$ is applied to input 11, which signal indicates whether the pulse generator must supply the constant signal at its output 13 for reading the record carrier, or write pulses in accordance with the information signal, or erasing pulses for erasing the information, or a combination thereof. The read signal $S_i'$ may be applied to input 12 so as to make the pulse generator function in dependence upon the information stored on the record carrier. As is shown by means of broken lines in Fig. 1, the output 13 of the pulse generator may be connected to a modulator 14 arranged in the path of the radiation beam 3, which modulator modulates the intensity of the radiation beam with the signals supplied by the pulse generator. Since the radiation beam of a diode laser can be satisfactorily modulated by means of the current through the diode laser, the pulse generator can also directly control the diode laser as is diagrammatically shown in Fig. 1. In that case the modulator is integrated with the laser to a radiation source which can be modulated.

The record carrier 1, a portion of which is shown in a cross-section in Fig. 2, comprises a transparent substrate 15 on which a stack of the following thin layers is provided: a semi-transparent metal layer 16, a dielectric layer 17, a recording layer 18, a subsequent dielectric layer 19, a subsequent metal layer 10 and a possible protective layer 21. In the embodiment of the record carrier shown the radiation beam 3 is incident through the substrate 15 on the stack of layers. The recording layer 18 consists of a phase-change material which can be switched by means of heating by a radiation beam between a state with an amorphous structure and a state with a crystalline structure. The information can be recorded in such a recording layer in a series of information areas, with the one structure in an environement with the other structure. The information areas are preferably ordered in juxtaposed tracks. The scanning spot 6 scans the track by moving the scanning spot 6 with respect to the record carrier 1. The information areas can be read by making use of the difference in reflection between the two states of the phase-change material. The scanning beam reflected by the recording layer then has an intensity which is modulated by the succession of information areas. The intensity modulation is converted in the detection system 8 into an electric read signal $S_i'$ which can be processed in known manner.

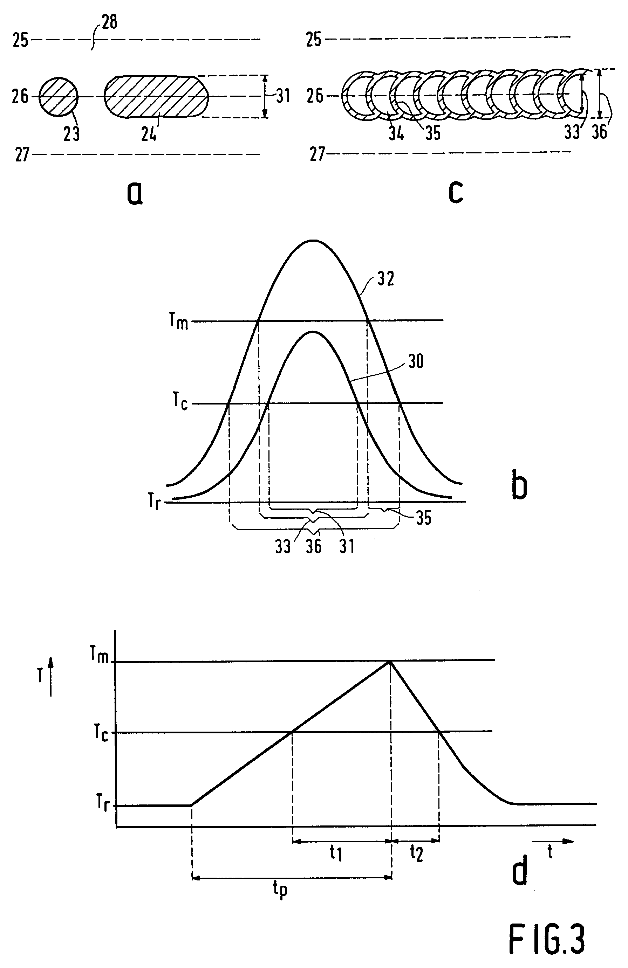

Fig. 3a shows a part of the recording layer 18 with two crystalline information areas 23 and 24 in an amorphous environment 28. The centrelines 25, 26 and 27 of three juxtaposed tracks are indicated by broken lines. The width of the tracks is equal, for example to the width of the information areas, the tracks being separated by informationless intermediate areas. When such an information area is written, the recording layer is locally heated by the radiation beam from room temperature $T_r$ to a temperature above the crystallization temperature $T_c$ and just below the melting point $T_m$ of the layer. The temperature of the recording layer as a function of the location then has a bell-shaped profile 13 as is shown in Fig. 3b. An area in the recording layer with a diameter 31 will thus crystallize, i.e. the atoms in the amorphous structure will order themselves in a crystalline structure. The crystallization time is the minimum time required for this ordering procedure. The power in the radiation beam, the period of time of the write pulse and the rate of cooling of the recording layer determine how long the layer will remain above a given temperature. The cooling rate is determined by the thermal properties of the layers at both sides of the recording layer. By correct choice of the pulse duration of the write pulse and the cooling rate it can be achieved that the temperature of the area to be written remains long enough above the crystallization temperature so as to cause the entire area to change from the amorphous to the crystalline state. In this way an information area 23 as shown in Fig. 3a can be written. For areas having a larger length, such as information area 24, a write pulse having a longer pulse duration is used, which keeps a longer area long enough above the crystallization temperature to crystallize it completely.

In order to erase the information areas, the crystalline structure of these areas must be converted into an amorphous structure again. To this end the recording layer is heated above the melting point $T_m$ by an erasing pulse, so that the layer melts and subsequently cools so rapidly at the end of the erasing pulse that the area solidifies in the amorphous state. The temperature profile of the recording layer at the end of the erasing pulse is indicated by the profile 32 in Fig. 3b. An area having a diameter 33 is melted by this pulse. This diameter is preferably slightly larger than the diameter 31 of the information area in order to melt the complete information area. The rate at which the layer cools down to the crystallization temperature after the end of the erasing pulse may be given a high value by manufacturing thin dielectric layers 17 and 19 of a satisfactorily thermally conducting material and by giving the metal layer 20 such a thickness that it can rapidly dissipate the heat by conduction in the plane of the metal layer. If a continuous radiation beam were used for erasing a track, the relatively long period of time during which the beam remains above each point of the track would cause the recording layer to be heated for a long time well above the crystallization temperature so that the track to be erased would crystallize completely. To avoid this, the recording layer is heated with erasing pulses having a pulse duration which is shorter than that of the write pulses, as is known, *inter alia* from said article in the IBM Technical Disclosure Bulletin.

However, after the publication of said IBM document it has become known that pulsed erasing of crystalline areas in an amorphous environment does not lead to the desired situation of a fully amorphous recording layer. For this reason the record carriers in which crystalline effects are written in an amorphous layer have hitherto been predominantly used for write-once record carriers in which the erasing problems do not occur. The Applicant has come to the conclusion, confirmed by experiments, that the above-mentioned method of pulsed erasing leads to results as shown in Fig. 3c. The Figure shows a recording layer in which a track has been erased with a series of erasing pulses, in which the consecutive heated areas overlap each other. Instead of a uniform amorphous track, a series of amorphous areas 34 surrounded by narrow crystalline areas 35 is obtained. The size of the crystalline areas depends on the erasing conditions and properties of the record carrier. At a subsequent write action a series of information areas is written over the series of narrow crystalline areas 35, at which action the crystalline areas 35 may subsist completely or partly between or on the edges of the newly written information areas. Consequently, when the newly written information is being read, the read signal exhibits so much noise, caused by the narrow areas, that this signal is difficult to process.

The origin of the narrow areas 35 can be explained with reference to Fig. 3b. The temperature distribution in the recording layer at the location of the scanning spot at the end of the erasing pulse is represented by means of the curve 32. The central area below the heating scanning spot 6 will be heated above the melting point over a diameter 33. A surrounding, annular area 35 with an inner diameter 33 and an outer diameter 36 is heated to a temperature between the crystallization temperature and the melting point. The annular area will remain in this temperature trajectory during a part of the pulse duration of the erasing pulse and the cooling time of the recording layer. In the known erasing methods this time is longer than the crystallization time. Consequently, the annular area will thus be entirely or partly change from the amorphous structure to the crystalline structure. After the radiation beam has been switched off, the annular area cools down in this crystalline structure. However, the central area, which is in its molten state during the erasing pulse, solidifies at the end of the erasing pulse due to the high cooling rate in the amorphous structure. After erasing, narrow crystalline areas are left on the recording layer within an area having a width of approximately diameter 36 minus diameter 33.

The present invention utilizes the above-mentioned recognition of the cause of the poor erasibility of the recording layer and provides the possibility of erasing such a recording layer satisfactorily. According to the invention, a relatively long crystallization time should be combined with a relatively short erasing pulse and a rapid cooling so that the annular area is above the crystallization temperature for a time which is shorter than the crystallization time. Within the duration of the short erasing pulse an annular area 35 will be heated above the crystallization temperature, likewise as with the known, long erasing pulses. However, before the atoms have been able to order themselves in this area in a crystalline structure, *i.e.* within the crystallization time, the erasing pulse is already switched off and the recording layer cools down to below the crystallization temperature. Consequently, the annular area 35 maintains its amorphous structure.

By applying the erasing pulses in such a rapid succession that the heated areas form an uniterrupted track, all information written in a track can be erased completely.

Whereas for unwanted crystallization of the annular areas 35 the duration of the erasing pulse as well as the cooling time is important during erasing, only the cooling time is important for rendering the central area with diameter 33 amorphous, and the time spent in the molten state is not important. Consequently, the designer of the record carrier will have the freedom to adapt the cooling rate to the requirements for rendering the central area amorphous by the choice of the layers around the recording layer, while the crystallization time can be adapted, by choosing the parameters of the recording layer, to the minimum pulse duration of the erasing pulses to be realised by means of the device.

In addition to said crystallization time, the heating time of the recording layer is important for the pulse duration of the erasing pulses. Fig. 3d shows the temperature variation T of the recording layer as a function of time t during erasing. This variation holds true for the part of the annular area 35 heated to the highest temperature, *i.e.* the part adjoining the inner diameter 33. The pulse duration of the erasing pulses denoted by $t_p$. Before the erasing pulse, the recording layer is at room temperature $T_r$. At the end of the erasing pulse the part of the recording layer adjoining the inner diameter 33 of the annular area 35 is heated to just below the melting point. The temperature variation during erasing pulse is shown as a straight line, which is a reasonable approximation for heating with a short pulse. At the end of the erasing pulse the layer cools down again to ambient temperature, along the curve shown. The temperature of the recording layer will be higher than the crystallization temperature $T_c$ during a time $t_1$ during the erasing pulse and a time $t_2$ from the start of the cooling period. According to the invention, the sum of these times $t_1$ and $t_2$ should be smaller than the crystallization time of the recording layer so as to prevent the layer from crystallizing. The time $t_2$ is the previously defined cooling time. For different recording materials it holds that $(T_m-T_r) \approx 2(T_c-T_r)$. For, for example many GeTeSb alloys it holds that $T_m \approx$ 630° C and $T_c \approx$ 300° C. It will be evident that for

such materials $t_1 \approx \frac{1}{2}t_p$, *i.e.* the inner portion of the annular area is above the crystallization temperature during half the pulse duration.

A record carrier in which the scanning rate is 1.3 m/s, as is conventional in record carriers of the compact disc type, will hereinafter be described as an example of an implementation of the invention. Such a record carrier having a structure as shown in Fig. 2 and designed for a radiation wavelength of 780 nm has the following structure: a transparent substrate 15 with refractive index n = 1.52, a metal layer 16 of 11 nm thick gold with n = 0.33 - i6.2, a dielectric layer 17 of 142 nm $Ta_2O_5$ with n = 2.1, a recording layer 18 of 10 nm $Ge_{42}Te_{42}Sb_{16}$ with n = 4.53 - i1.17, a dielectric layer 19 of 10 nm $Ta_2O_5$, a metal layer 20 of more than 30 nm thick gold and a protective layer 21. If the metal layer 20 is more than 30 nm thick, the transmission of the layer for the radiation is negligibly small. The reflection of this record carrier with the recording layer in the amorphous state is 71%, and 27% with the recording layer in the crystalline state. The information areas are written by means of a write pulse having a minimum pulse duration of 770 ns and a power which is sufficient to heat the recording layer just below the melting point. By taking a crystallization time of, for example 400 ns, the recording layer has sufficient time within the write pulse to crystallize so that a crystalline information area is written. The crystallization time is dependent, *inter alia* on the chemical composition of the recording layer. For a layer of, for example $GeSb_2Te_4$ the crystallization time can be varied by adding Sb. Without additional Sb the crystallization time is 50 ns, and with the material $GeSb_4Te_4$, hence with additional Sb, the crystallization time is 1 $\mu$s. The cooling rate of the recording layer 18 can be varied by means of the thickness of the type of metal of the metal layer 20 and the thickness and thermal conduction of the dielectric layer 19. For the given structure of the record carrier and a thickness of 30 nm of the gold layer 20, the cooling rate is 20 K/ns, and 30 K/ns at a thickness of 100 nm. If the temperature varies linearly with time during the time $t_2$, as is shown in Fig. 3d, and if $T_c$ and $T_m$ have the previously mentioned values of 630°C and 300°C, the cooling rate for a gold layer of 30 nm thick is approximately equal to 16 ns. By erasing with the pulses of 30 ns, the period of time when the inner portion of the annular amorphous area 35 is above the crystallization temperature, is approximately equal to $\frac{1}{2}$*30+30 = 45 ns, which is shorter than the crystallization time. Consequently, the inner portion of the annular area 35 will not crystallize and remains amorphous. The portion surrounding it has a lower temperature at the end of the erasing pulse than the inner portion, as is clearly shown in Fig. 3b, and will consequently cool down more rapidly below the crystallization temperature; this portion thus remains at a temperature above the crystallization temperature for a shorter time than the inner portion. Moreover, the crystallization time increases with a decreasing temperature so that the surrounding portion of the annular area 35 will certainly remain amorphous during erasing. By working with an erasing pulse repetition time between 300 and 700 ns, a continuous amorphous track is obtained.

Previously written information can be directly overwritten with new information by supplying a write pulse during the time when an information area must be written and by supplying a series of erasing pulses between successive write pulses. Fig. 4, which indicates the power P in the radiation beam as a function of time t, shows a write pulse 40 preceded and succeeded by a series of erasing pulses 41. In the case of direct overwriting, the write pulse can be advantageously started with a preheating pulse 42, *i.e.* a short pulse having a higher power than the subsequent part of the write pulse. The preheating pulse ensures that the recording layer is rapidly heated so that writing starts earlier than in the case of a write pulse without a preheating pulse. This leads to a shorter transition between an erased and a written area and provides the possibility of increasing the information density. With a satisfactory ratio between the power in the preheating pulse and the subsequent part of the write pulse, the written information area acquires a uniform width over the length of the information area. The latter can also be realised by means of a write pulse comprising a series of pulses.

The intermediate areas located just outside the tracks on the recording layer, *i.e.* outside the diameter 33 in Fig. 3c will be heated above the crystallization temperature during erasing, but only for a short time so that these intermediate areas do not change to the crystalline state during an erasing action. However, the phase-change material has a memory so that crystallization may still occur after repeated erasing. This memory does not lead to problems around the centreline because, due to the layer melting, the memory is erased during each writing action. The unwanted crystallization of the intermediate areas may be obviated by erasing the recording layer once after a given number of erasing actions, at which the scanning spot 6 does not scan along the centreline of the tracks but between the tracks. Such a change of the path of the scanning spot can be realised in known manner by means comprising a control loop 37 for tracking which influences, for example the position of the objective system 5, and an electric circuit 38 for changing the polarity of a tracking error signal $S_t$ which controls the control loop and is generated in the detection system 8. Due to said polarity change, the scanning spot 6 no longer tracks the centreline of a track but a path midway between two neighbouring centrelines.

It is also possible to slow down the unwanted crystallization. This can be realised by ensuring that there is a minimum number of crystallization nuclei between the tracks, so that there is a maximum crystallization time. This can be realised by taking a recording layer material having fewer crystallization nuclei. To be able to write such a layer sufficiently rapidly, the number of crystallization nuclei around the centreline of the track should be increased. To this end a narrow groove may be provided on the centreline, which groove has a width of, for example one third of the track period and a V-shaped cross-section. It has been found that the sharp bottom and the edges of the groove function as crystallization nuclei.

The unwanted crystallization of the intermediate areas during erasing, caused by the memory of the recording layer, will occur earlier when the pulse duration of the erasing pulse is of the same order as the crystallization time. To prevent areas in their still amorphous state from becoming crystalline in that case, it is recommendable to generate the erasing pulses in such a case only if the scanning spot is present in crystalline areas which must be erased, and not generated the erasing pulses if the spot is present in the areas which are already amorphous. In the period between successive erasing pulses it is possible to read the record carrier. Dependent on the state, either crystalline or amorphous, of the area where the scanning spot is present, erasing pulses are generated or not generated. An advantage of this erasing strategy is that the laser is subjected to a smaller load. For the purpose of reading, a radiation beam having a low intensity must be incident on the recording layer between the erasing pulses. If this method of reading-before-erasing is not used, it is recommendable to switch off the beam completely between the erasing pulses, because this will increase the cooling rate of the recording layer at the end of an erasing pulse.

As will be evident from the foregoing, the power absorbed by the recording layer during erasing should be higher than during writing because the layer must be heated to a higher temperature during erasing than during writing. In accordance with the further aspects of the invention the maximum power to be supplied by the device can be limited by forming the record carrier 1 by means of suitable choice of the layers 16, 17, 18, 19 and 20 in such a way that its reflection with the recording layer in the amorphous state is larger than that with the recording layer in the crystalline state. If the record carrier has a small transmission, the absorption in the crystalline state will then be higher and a larger part of the incident power than in the amorphous state will be absorbed. The power of the erasing pulses is optimally utilized by maximizing the absorption of the radiation in the recording layer in the state in which the highest power in the recording layer is required, *i.e.* during erasing. It is true that the power of the write pulses is utilized less optimally, but this is not a drawback because less power is required for writing. With a satisfactory choice of the reflection of the record carrier in the two states it is possible to write and erase with write and erasing pulses of the same power. The pulse generator 9 of the device should then be able to generate only pulses of different pulse duration and equal value. This method is quite suitable for directly overwriting information in a system in which the possible positions of the information areas in the recording layer are fixed. During overwriting it can then be avoided that the scanning spot is located at an interface between an amorphous area and a crystalline area during a pulse, so that the reflection, averaged across the scanning spot, would have an undefined value and the pulse would not yield the desired write or erasing result.

A record carrier which initially, *i.e.* in the amorphous state, has a high reflection, is compatible with record carriers of the compact disc type in the case of a suitable choice of the amorphous and crystalline reflections. The values of the reflections can be satisfactorily realised in record carriers having a stack of layers which, viewed from the radiation entrance side, comprise MIP, PIM, DIPIM or MIPIM, in which M is a metal layer, I is a dielectric interference layer, P is a recording layer of phase-change material and D is one or more dielectric layers together forming a reflector.

## Claims

1. An information storage system comprising a device and a record carrier, which device comprises a radiation source for generating a radiation beam for scanning the record carrier, and a pulse generator for generating write pulses and erasing pulses, the output of said generator being connected to an input of a modulator for modulating the intensity of the radiation beam, said record carrier having a recording layer in which information can be written by changing an area of the recording layer having an amorphous structure by means of write pulses of said radiation into an information area having a crystalline structure, and in which information can be erased by heating an information area above the melting point of the recording layer by means of erasing pulses of said radiation, characterized in that the pulse duration of the erasing pulses and the cooling time of the recording layer are so short that the areas of the recording layer which are heated during erasing to a temperature which is higher than the crystallization temperature and lower than the melting point remain above the crystallization temperature of the recording layer only during a period of time which is shorter than the crystallization time.

2. A system as claimed in Claim 1, characterized in that the erasing pulses have such a pulse duration that the cooling time plus half the pulse duration of the erasing pulses is shorter than the crystallization time of the recording layer.

3. A system as claimed in Claim 1 or 2, characterized in that during erasing the pulse generator generates a series of erasing pulses having such a duration between the erasing pulses that the areas in the recording layer successively heated by the radiation overlap each other.

4. A device for use in a system as claimed in Claim 1, 2 or 3, characterized in that the device comprises a detection system for generating a read signal from the radiation originating from the record carrier, which read signal is applied to an input of the pulse generator, and in that the pulse generator is adapted to generate erasing pulses only at those periods of time when the read signal indicates the presence of a information area.

5. A device for use in a system as claimed in Claim 1, 2 or 3, or as claimed in Claim 4, characterized in that the pulse generator is adapted to convert an information signal to be written, and applied to an input of the pulse generator, into a series of erasing pulses interrupted by one or more write pulses at those periods of time when in accordance with the information signal an information area is to be written.

6. A device for use in a system as claimed in Claim 1, 2 or 3, or as claimed in Claim 4 or 5, characterized in that the device comprises means for causing the centre of a scanning spot formed by the radiation beam to track a path on the recording layer substantially midway between neighbouring tracks for recording information areas.

7. A record carrier for use in a system as claimed in Claim 1, 2 or 3, characterized in that the recording layer has tracks in which the written areas are ordered and in that there are more crystallization nuclei proximate to the centreline of the tracks than right between the tracks.

8. A record carrier as claimed in Claim 7, characterized in that there are grooves in the middle of the tracks in which sharp interfaces in the profile of the tracks constitute crystallization nuclei.

9. A record carrier for use in a system as claimed in Claim 1, 2 or 3, characterized in that the reflection of the record carrier with the recording layer in the amorphous structure is larger than that with the recording layer in the crystalline structure.

10. A device for use in a system as claimed in Claim 1, 2 or 3, with a record carrier as claimed in Claim 9, characterized in that the amplitudes of the write pulses and erasing pulses are substantially equal.

FIG.1

FIG.2

FIG.4

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 337 806 (FUJI PHOTO FILM CO. LTD.) | 1,3,6-8, 10 | G11B7/00 G11B7/125 |
| | * the whole document * | | |
| Y | | 9 | |
| A | | 2,5 | |
| | --- | | |
| A | EP-A-0 318 200 (MATSUSHITA ELECTRIC IND CO LTD) | 1-3,5-10 | |
| | * the whole document * | | |
| | --- | | |
| Y | EP-A-0 344 317 (MATSUSHITA ELECTRIC IND CO LTD) | 9 | |
| | * page 3, line 16 - page 4, line 9 * | | |
| | ----- | | |

TECHNICAL FIELDS
SEARCHED     (Int.Cl.5)

G11B

The present search report has been drawn up for all claims

| Place of search | Date of completion of the search | Examiner |
|---|---|---|
| THE HAGUE | 19 November 1993 | BENFIELD, A |